# EUROPEAN PATENT APPLICATION

(11) **EP 4 542 053 A1**
(43) Date of publication of application: **23.04.2025**
(21) Application number: 23306805.5
(22) Date of filing: 16.10.2023
(51) Int. Cl.: F15B 1/027, F15B 1/22, F15B 1/24, B64C 13/00, F15B 1/10, F15B 1/033, F15B 7/00

(54) **EHA ACCUMULATOR REFILLING ARRANGEMENT**

(71) Applicant: Goodrich Actuation Systems SAS, 27950 Saint-Marcel (FR)
(72) Inventor: MEDINA, Raphael, 93380 Pierrefitte Sur Seine (FR); MARRANT, Hippolyte, 75017 Paris (FR)
(74) Representative: Dehns

(57) **Abstract**

An accumulator assembly for providing hydraulic fluid to an electrohydrostatic actuator, EHA, the assembly comprising: accumulator (1) for containing a supply of hydraulic fluid, the accumulator having an exit port via which hydraulic fluid can flow, in use, to the actuator; the assembly further comprising an accumulator refill arrangement fluidly connected to a supply of hydraulic fluid for refilling the accumulator via a fluid line (15) when a level of fluid in the accumulator is below a predetermined value, wherein the accumulator comprises a cylinder (10) defining a fluid chamber (11) and an accumulator piston (12) moveable within the cylinder relative to the chamber responsive to the fluid pressure, the refill arrangement including a spool (60) moveable across the fluid line between an open position, wherein fluid can flow along the fluid line from the supply (2) to the chamber, and a closed position, wherein the spool blocks the flow of fluid from the supply to the chamber and also from the chamber to the supply, and wherein the piston is linked to, and moves, a ramped surface (111) that engages the spool such that the contact force between the ramped surface and the spool varies as the piston moves relative to the chamber, whereby when the chamber is in a full state, the contact force is such as to locate the spool in the closed position and when the level of fluid is less than the predetermined value, the contact force is such as to locate the spool in the open position.

## Description

### TECHNICAL FIELD

The disclosure relates to hydraulic actuators and in particular electro hydrostatic actuators (EHA) and refilling accumulators of such actuators.

### BACKGROUND

Actuators are used in many fields to move or operate other components or surfaces. Various types of mechanical, hydraulic and electrical actuators are known. Electromechanical and electrohydrostatic actuators are commonly known in machinery, vehicles, aircraft and other uses. Actuators are often operated using hydraulic fluid to apply pressure to the actuator parts and cause movement of the actuator which, in turn, causes movement of the component or surface to be moved. In more recent times, the benefits of electromechanical and electrohydrostatic actuators have been combined in electrohydrostatic actuators (EHA). In an EHA, an electric motor drives a pump connected to the chambers of a hydraulic cylinder. The direction of the flow causes retraction or extension of the actuator piston. The required hydraulic fluid volume is stored in an accumulator between the pump and the actuator cylinder. This accumulator reduces the pressure variation due to fluid dilatation too. Such EHAs are also known as 'Power by Wire' actuators and are fully self-contained actuation systems.

Electrohydrostatic actuators need to be connected to a supply of hydraulic fluid and therefore require plumbing to a reservoir of pressurised fluid. On aircraft or in other vehicles or plant, this can be a problem because of the piping/plumbing required and the need for a suitably located reservoir. In aircraft, for example, such actuators have conventionally been connected to the central aircraft hydraulic supply by pipes/tubes. Ideally, the accumulator should be available to compensate for leakages in the EHA hydraulic system for the whole life of the EHA (which can exceed 20 years). To remain viable for such a long period of use, the accumulator typically needs to be very large or needs to be re-filled as the level of fluid in the accumulator drops due to external leakages. Very large accumulators are often not feasible where space is limited and/or weight constraints apply e.g. in aircraft. Refillable accumulators are, therefore, typically installed. Conventionally, accumulators have been re-filled as a maintenance operation, on the ground, requiring downtime of the EHA and, e.g. the aircraft or other environment in which the EHA is installed. Alternatively, systems have been developed in which, as the actuator leaks fluid, it can be topped up from the aircraft (or other environment) supply. The level of fluid is detected by a pressure sensor which, when the pressure is low, activates a solenoid valve to fill the accumulator via a fill valve e.g. a poppet valve. Whilst such systems allow the accumulator to be filled in situ, this can require long lengths of piping extending through the aircraft to the location of the actuators such as on landing gear or wings, as well as complex, costly and bulky components such as the solenoid, pressure sensor and fill valve. As well as the disadvantages of added weight and space requirements of such piping, there is also an increased risk of damage to the pipes and components, or leakage.

Self-contained EHAs have found favour in many applications such as, but not only, on aircraft. For example, with the trend towards More Electric Aircraft (MEA) or, in the future All Electric Aircraft (AEA), the aircraft will not have any, or have a much smaller, hydraulic supply and so autonomous actuators will be necessary. With EHAs, however, particularly if intended for long term use - e.g. for the entire flight life (approximately 150,000 flight hours or 30 years) of an aircraft, or in other applications where it is desirable that the actuator can operate over a long time without needing to be refilled or replaced, the accumulator will need to be large enough to contain hydraulic fluid to service the actuator over that time. Such large accumulators add to the overall weight and size of the system.

Particularly taking into account that the refilling of the accumulator is not even a primary function of the system, the additional costs, size and weight of components parts are undesirable. There is a need for an EHA accumulator refilling arrangement that allows the accumulator to be refilled without the need for complex, large, heavy and expensive components, but that can still provide the long life required in such applications.

### SUMMARY

In one aspect, there is provided an accumulator assembly for providing hydraulic fluid to an electro hydrostatic actuator, EHA, the assembly comprising: an accumulator for containing a supply of hydraulic fluid, the accumulator having an exit port via which hydraulic fluid can flow, in use, to the actuator; the assembly further comprising an accumulator refill arrangement fluidly connected to a supply of hydraulic fluid for refilling the accumulator via a fluid line when a level of fluid in the accumulator is below a predetermined value, wherein the accumulator comprises a cylinder defining a fluid chamber and an accumulator piston moveable within the cylinder relative to the chamber responsive to the fluid pressure, the refill arrangement including a spool moveable across the fluid line between an open position, wherein fluid can flow along the fluid line from the supply to the chamber and also from the chamber to the supply, and a closed position, wherein the spool blocks the flow of fluid from the supply to the chamber, and wherein the piston comprises a ramped surface that engages the spool such that the contact force between the ramped surface and the spool varies as the piston moves relative to the chamber, whereby when the chamber is in a full state, the contact force is such as to locate the spool in the closed position and when the level of fluid is less than the predetermined value, the contact force is such as to locate the spool in the open position.

The assembly also includes a trigger assembly arranged to lock the spool in the open position until the fluid level exceeds the predetermined value. The trigger prevents the spool from immediately returning to the closed position once the level of fluid has increased enough above the 'low level', without reaching the 'full level'. The trigger allows the system to be directly fully filled. The `full' level is determined by the trigger/spring stroke.

The accumulator is any suitable accumulator e.g. a metal bellows type accumulator, or a piston and spring type accumulator.

Also provided is an actuator assembly comprising an actuator and an accumulator assembly as described above.

Preferred embodiments will now be described by way of example only, with reference to the drawings. The described examples relate to EHAs for use in aircraft applications such as wing actuators, but the EHA assembly of the disclosure can find application, and be advantageous, in other areas.

### BRIEF DESCRIPTION OF THE DRAWINGS

Figure 1 shows a schematic view of a known EHA assembly with a refillable accumulator, for background explanation.
Figure 2A is a schematic view of an accumulator with a refilling arrangement according to this disclosure, in an open position.
Figure 2B is a schematic view of an accumulator as shown in Fig. 2A, in a closed position.
Figures 3A to 3D are schematic views showing operation of a filling arrangement of a spring type accumulator according to the disclosure.

### DETAILED DESCRIPTION

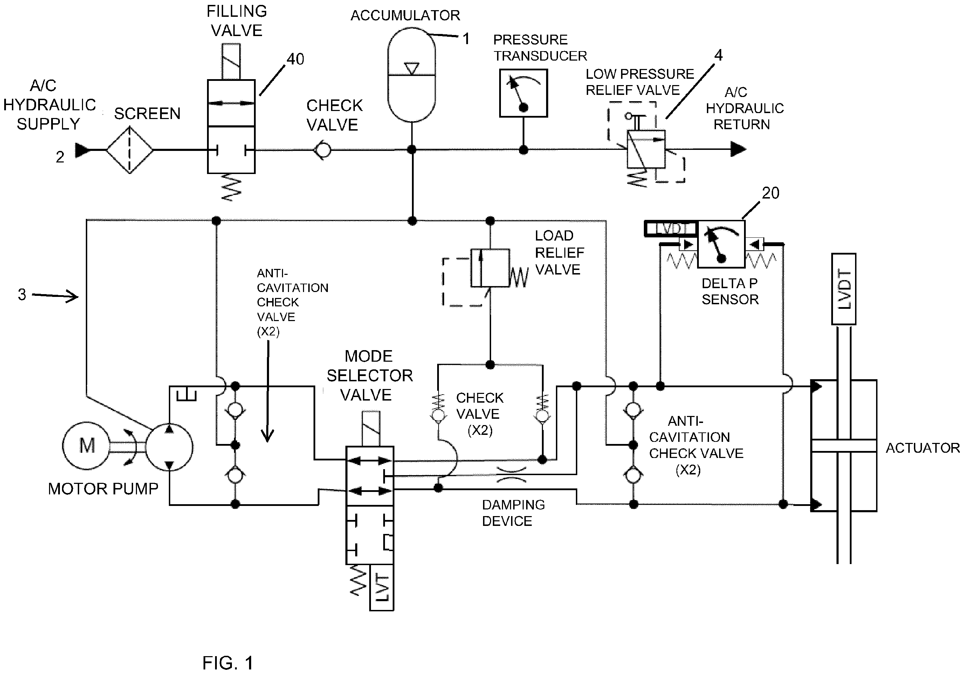

Referring first to Fig. 1, existing EHA technology will be briefly described. The actuator components will not be described as these are known in the art. The accumulator 1 containing pressurised air for the actuator is integrated in the actuator hydraulic system between the aircraft hydraulic supply 2 and the EHA (indicated generally by 3). The parts and operation of the EHA 3 are known and will not be described further here.

The accumulator 1 will be initially provided in a full, or almost full, state, with sufficient fluid to be operable for the e.g. the life of the actuator or the flight life of the aircraft or any other long-life application and is connected in the hydraulic loop of the actuator. Should additional hydraulic fluid need to be injected into the EHA hydraulic loop e.g. due to leakage, this will be provided from the accumulator 1. In the example shown, a depressurizing system 4 is also provided to remove pressure from the system if required. Again, this is conventional, and will not be described further here.

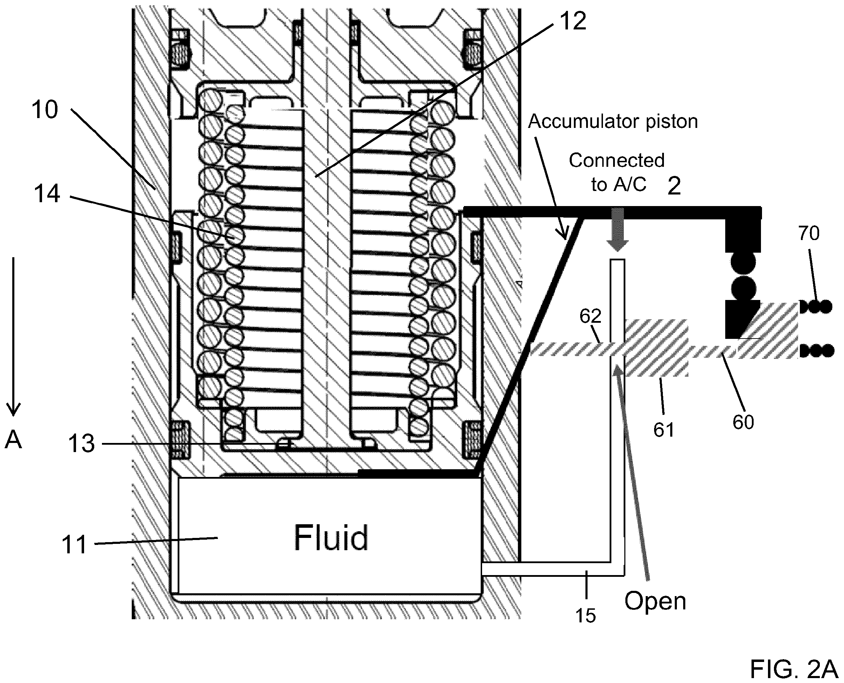

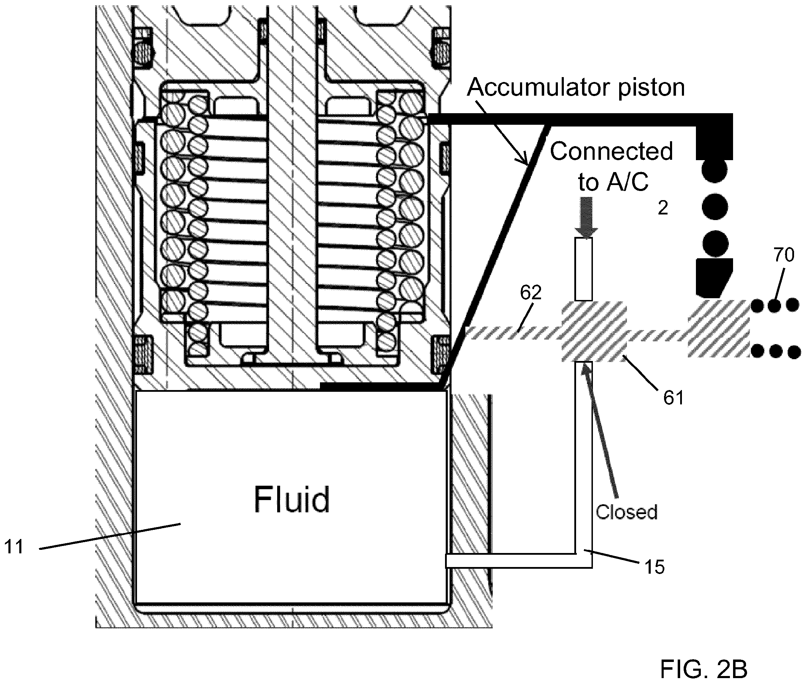

One example of a spring type accumulator for use in such an assembly can be seen in Figs. 2A and 2B. The accumulator is in the form of a cylinder 10 defining a chamber 11 containing the pressurised fluid. A piston 12 is axially moveable within the cylinder 10. The pressure of the fluid in the chamber 10 acts on one side of the piston head 13 and a spring 14 acts on the other side of the piston head. Such accumulator structures per se are known and this will not be described in further detail. The refilling arrangement according to the disclosure, described further below, can be used to refill such accumulators but is not limited thereto. Other types of accumulator e.g. a gas accumulator, a bellows-type accumulator etc. may also be refilled using the arrangement of this disclosure.

Fig. 2A shows the accumulator piston 12 that, as the level of fluid ('Fluid') in the chamber drops, moves in direction A. This is detected by the pressure sensor 20 (Fig. 1) which, in turn, activates the solenoid 30 (Fig. 1) to allow flow of fluid from the aircraft supply 2, via a refill valve 40 (Fig. 1) into the accumulator chamber 11.

The refilling arrangement provided according to the present disclosure avoids the need for the solenoid 30, the pressure sensor 20 and the filling valve 40 to refill the accumulator by, instead, detecting the position of the piston in the accumulator and, if this position indicates a low level of fluid in the accumulator chamber, automatically opens a mechanical valve within the accumulator itself to fill the accumulator.

The mechanical valve comprises a ramp (described further below) on the accumulator piston, which can drive a spool, which will open depending on the level of fluid in the accumulator. The spool is locked by a trigger to remain open until the accumulator chamber has reached a desired fill level.

In the open position (Fig. 2A), the fluid chamber 11 is indicated below and in contact with the lower end of the accumulator piston 12. The fluid chamber 11 is fluidly connected via a fluid line 15 to the aircraft (or other environment) hydraulic supply A/C 2. A spool 60 is assembled to extend across the fluid line 15 and to be movable, due to movement of the piston 12, relative to the fluid line. The spool 60 is biased relative to the accumulator cylinder by a spool spring 70. The spool 60 has a first spool body portion 61 which is provided with one or more ports 62 which, when aligned with the fluid line 15 allow the flow of fluid therethrough from the hydraulic supply 2 to the fluid chamber 11 of the accumulator. The piston 11 is provided with a ramp or tapered surface 111 which tapers relative to the direction across which the spool extends.

In the open position (Fig. 2A), the port 62 is aligned with the fluid line 15 and the spool 60 is locked in the open state, as described further below, by a trigger until the 'full level' is reached. In the closed position (Fig. 2C), the trigger releases the spool 60 to return to the position in which the port 62 is not aligned with the fluid line 15, thus blocking fluid flow.

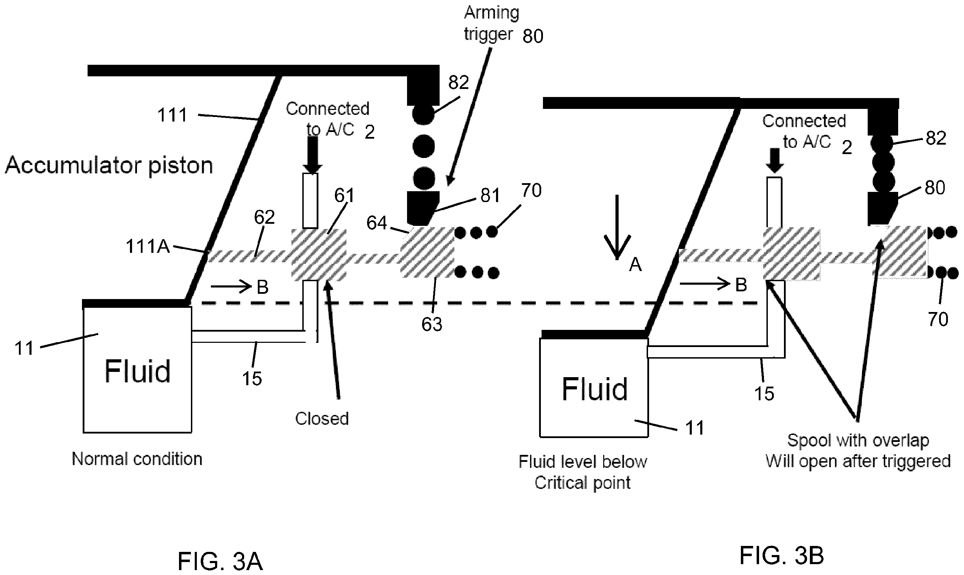

The structure and operation of the refilling arrangement according to this disclosure will now be described with reference to the example design shown in Figs. 3A to 3D.

When the accumulator is in its normally filled state - i.e. when the level of fluid in the accumulator is at the desired level, as shown in Fig. 3A, the part 111A of the tapered ramp 111 of the piston that abuts the spool 60, and the length of the spool and the force of the spool spring are such that the spool body 61 is located across the fluid line 15 thus closing the fluid line and preventing flow from the hydraulic supply 2 and the fluid chamber and from the fluid chamber to the supply.

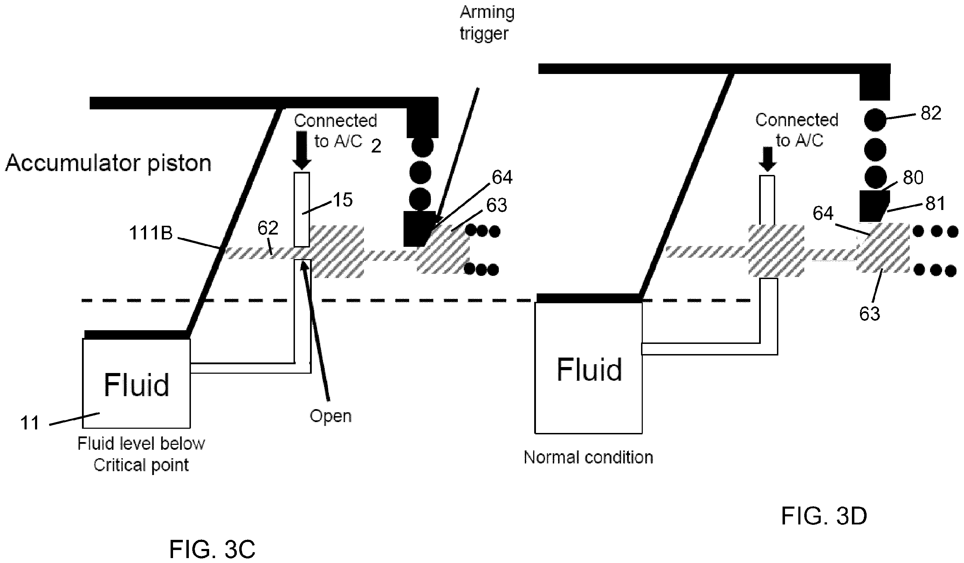

As the fluid level begins to drop (Fig. 3B) thus causing the piston to move down into the chamber (direction A), the ramp of the piston is such that the tapered surface 111 pushes the spool 60 against the force of the spool spring 70, in direction B until the ramp surface at 111B abuts the spool which causes the spool port 62 to be aligned with the fluid line 15 as shown in Fig. 3C. This then opens the spool to permit flow of fluid from the supply 2 into the accumulator fluid chamber 11 to re-fill the chamber.

In order to ensure that the chamber is filled to its desired level but that, once that level is achieved, the spool is closed, the arrangement of this disclosure may also be provided with a trigger assembly comprising a trigger block 80 and a trigger spring 82 that biases the trigger block towards a second portion 63 of the spool body 60 spaced from the first portion 61. The trigger block is provided with a tapered surface 81 and the second portion 63 of the spool body is provided with a complementary tapered surface 64, described further below.

In the normal state, shown in Fig. 3A, when the fluid chamber is full and the ramp 111 of the piston engages the spool at point 111A such that the first portion 61 of the spool body blocks the fluid line 15, the second portion 64 of the spool body abuts with the trigger block 80 with the trigger block 80 located between the trigger spring 82 and the second portion of the spool body. In this position, the spool is able to move (direction B) relative to the trigger.

As the spool is pushed by the piston ramp further in direction B, the trigger block slides over the second portion of the spool and its ramped surface 81 slides down the ramped surface 64 of the second portion of the spool block as they come into contact with each other. When the spool has reached the open state (Fig. 3C), the ramp surfaces of the second portion of the spool and of the trigger block are in locking engagement with each other due to the force of the trigger spring and of the piston ramp pressing the spool in direction B against the force of the spool spring 70.

As the fluid chamber starts to fill, the fluid pressure pushes the piston upwards (against direction A) such that the ramp surface 111 moves away from contact with the spool and the spring 82 expands. As the spring 82 load is higher than the spring 70 load, the spool is locked until the spring 82 reaches its full stroke, corresponding to the 'full level'. In this position (Fig. 3D), the trigger releases the spool and the force of the spool spring 70 pushes the spool back (against direction B) to the closed position.

In some examples, a proximity sensor may be provided to sense the position of the spool so as to allow monitoring of how often filling is occurring.

By incorporating the valve mechanism inside the accumulator itself, as described above, there is no need for the solenoid, fill valve and pressure sensor of the conventional systems for filing the accumulator.

## Claims

1. An accumulator assembly for providing hydraulic fluid to an electrohydrostatic actuator, EHA, the assembly comprising: an accumulator (1) for containing a supply of hydraulic fluid, the accumulator having an exit port via which hydraulic fluid can flow, in use, to the actuator; the assembly further comprising an accumulator refill arrangement fluidly connected to a supply of hydraulic fluid for refilling the accumulator via a fluid line (15) when a level of fluid in the accumulator is below a predetermined value, wherein the accumulator comprises a cylinder (10) defining a fluid chamber (11) and an accumulator piston (12) moveable within the cylinder relative to the chamber responsive to the fluid pressure, the refill arrangement including a spool (60) moveable across the fluid line between an open position, wherein fluid can flow along the fluid line from the supply (2) to the chamber, and a closed position, wherein the spool blocks the flow of fluid from the supply to the chamber and also from the chamber to the supply, and wherein the piston is linked to, and moves, a ramped surface (111) that engages the spool such that the contact force between the ramped surface and the spool varies as the piston moves relative to the chamber, whereby when the chamber is in a full state, the contact force is such as to locate the spool in the closed position and when the level of fluid is less than the predetermined value, the contact force is such as to locate the spool in the open position.

2. The assembly of any preceding claim, whereby the accumulator is a piston and spring type accumulator.

3. The assembly of claim 1, whereby the accumulator is a metal bellows type accumulator

4. The assembly according to any of claims 1 to 3, further comprising a trigger assembly (80, 81, 82) configured to hold the spool in the open position until the level of fluid is equal to or exceeds the predetermined value.

5. The assembly according to claim 4, wherein the trigger assembly comprises a trigger portion (63) of the spool body at an end of the spool body opposite where the spool engages with the ramped surface, a trigger block (80) configured to engage with the trigger portion of the spool body to prevent the spool body moving to the closed position, and biasing means (82), 70) arranged to hold the trigger block in engagement with the trigger portion until the level of fluid is equal to or exceeds the predetermined value.

6. The assembly according to claim 5, wherein the trigger block has a tapered surface (81) that, in the open position, engages with the trigger portion of the spool.

7. The assembly according to claim 6, wherein the trigger portion has a tapered surface (64) corresponding to, and engaging with, that of the trigger block.

8. The assembly of any of claims 5 to 7, wherein the biasing means comprises a spool spring (70) biasing the spool in the closed direction and a trigger spring (82) biasing the trigger block into engagement with the trigger portion.

9. The assembly of claim 8, wherein the force of the trigger spring exceeds that of the spool spring, such that the spool spring can only move the spool to the closed position at the end of the stroke of the trigger spring, that occurs when the level of fluid is equal to or exceeds the predetermined value.

10. An actuator assembly comprising an actuator and an accumulator assembly as claimed in any preceding claim.

11. The actuator assembly of claim 10, being configured to be mounted on an aircraft wing.
